**Europäisches Patentamt**

**European Patent Office**

**Office européen des brevets**

(19)

(11) Veröffentlichungsnummer: **0 438 668 A2**

## (12) EUROPÄISCHE PATENTANMELDUNG

(21) Anmeldenummer: **90122759.5**

(22) Anmeldetag: **28.11.90**

(51) Int. Cl.⁵: **G02B 6/44**

(30) Priorität: **26.01.90 DE 4002321**

(43) Veröffentlichungstag der Anmeldung:
**31.07.91 Patentblatt 91/31**

(84) Benannte Vertragsstaaten:
**AT BE CH DE ES FR GB GR IT LI NL SE**

(71) Anmelder: **Siemens Aktiengesellschaft**
**Wittelsbacherplatz 2**
**W-8000 München 2(DE)**

(72) Erfinder: **Hahn, Reinhold**
**Perhamer Strasse 33**
**W-8000 München 21(DE)**

(54) **Verfahren zur Herstellung von Lichtwellenleiter enthaltenden Faserbändchen und Vorrichtung zur Durchführung des Verfahrens.**

(57) Die Lichtwellenleiter (LW1-LW4) werden vor der Beschichtung über mindestens eine Rolle (z.B. FR1) geführt, an deren Außenseite ringförmige Nuten vorgesehen sind, die zur Aufnahme der Lichtwellenleiter dienen. Die Lichtwellenleiter liegen zumindest in einem Teilbereich des Umfangs an der Rolle an. Dadurch läßt sich eine gleichmäßige und exakte Positionierung der Lichtwellenleiter bei der späteren Beschichtung erzielen.

FIG 4

EP 0 438 668 A2

# VERFAHREN ZUR HERSTELLUNG VON LICHTWELLENLEITER ENTHALTENDEN FASERBÄNDCHEN UND VORRICHTUNG ZUR DURCHFÜHRUNG DES VERFAHRENS

Die Erfindung betrifft ein Verfahren zur Herstellung von mehrere Lichtwellenleiter enthaltenden Faserbändchen, wobei die Lichtwellenleiter von Vorratsspulen abgezogen und einer gemeinsamen Beschichtungseinrichtung zugeführt werden.

Aus der EP-A2 0 165 632 ist es bekannt, daß einzelne Lichtwellenleiter von einer Vorratsrolle abgezogen und einer freilaufenden Rolle zugeführt werden, wobei die Lichtwellenleiter nebeneinander auf dieser Rolle aufliegen. Eine Führung der Lichtwellenleiter im Bereich der Außenfläche der Rolle ist dabei nicht vorgesehen, so daß der Abstand zwischen den einzelnen Lichtwellenleitern sich je nach z.B. der Stellung und Lage der Ablaufspulen oder der Zugspannung sowie sonstiger Betriebsbedingungen verändern kann. Die genannte Rolle dient dabei im wesentlichen dazu, daß ein klebendes Beschichtungsmaterial auf eine Seite der Lichtwellenleiter aufgebracht wird, was im einzelnen dadurch erreicht wird, daß an der genannten Rolle eine weitere, in die Beschichtungs-Flüssigkeit eintauchende Benetzungsrolle anliegt.

Aus der US-PS 4 096 010 ist es bekannt, mehrere von Vorratsspulen kommende Lichtwellenleiter über eine Führungseinrichtung zusammenzuführen, wobei diese Führungseinrichtung mit parallel verlaufenden V-Nuten versehen ist. Als gemeinsame Umhüllung sind zwei Folienbänder vorgesehen, welche von außen zulaufen und die Lichtwellenleiter zwischen sich einschließen. Im Bereich der äußeren Enden werden diese Folienbänder miteinander verbunden, z.B. durch Schweißen oder Kleben.

Die Lichtwellenleiter sollten innerhalb des Faserbändchens in ihrer gegenseitigen Positionierung zueinander möglichst genau festgelegt werden, was z.B. für Spleißvorgänge, insbesondere mit Vielfachspleissen von großer Bedeutung ist.

Der Erfindung liegt die Aufgabe zugrunde, ein Verfahren zu schaffen, bei dem in einfacher Weise die Positionierung der Lichtwellenleiter zueinander möglichst genau erfolgen kann.

Gemäß der Erfindung, welche sich auf ein Verfahren der eingangs genannten Art bezieht, wird dies dadurch erreicht, daß die Lichtwellenleiter vor dem Einlauf in die Beschichtungseinrichtung über mindestens eine mit Nuten versehende Rolle geführt werden, wobei die Lichtwellenleiter auf einem Teilbereich des Umfangs auf der Rolle aufliegen.

Die auf der Rolle angebrachten Nuten legen den gegenseitigen Abstand der Lichtwellenleiter genau fest und zwar exakt in dem Bereich, wie er durch den Abstand der Nuten festgelegt ist. Einwirkungen auf die Positionierung der Lichtwellenleiter, z.B. aus der Art der Positionierung der Vorratsspulen für die Lichtwellenleiter, aus der Ablaufgeschwindigkeit und/oder aus der Zugspannung sind somit bei der Erfindung ausgeschlossen.

Ergänzend zu den vorstehend beschriebenen Maßnahmen oder auch unabhängig hiervon läßt sich die Positionierung der Lichtwellenleiter bei einem Verfahren der eingangs genannten Art auch dadurch verbessern, daß die Lichtwellenleiter im Bereich der Beschichtungseinrichtung über parallel nebeneinanderliegende Nuten geführt wird und daß im Bereich dieser Nuten das Material für die gemeinsame Beschichtung der Lichtwellenleiter diesen zugeführt wird.

Da sich im Bereich der Nuten auch das Beschichtungsmaterial befindet, legen diese Nuten genau den gegenseitigen Abstand unter Einbeziehung dieses Beschichtungsmaterials fest. D. h. es kann nicht vorkommen, daß, z.B. durch Veränderungen der Strömungsgeschwindigkeit oder die Viskosität des Beschichtungsmaterials bedingt, Schwankungen im Abstand der Längsachsen der Lichtwellenleiter zueinander unerwünscht große Werte annehmen. Mit der Erfindung ist es somit möglich, Faserbändchen herzustellen, bei denen die Lichtwellenleiter eine genaue, geringstmöglichen Toleranzen aufweisende Positionierung aufweisen. Somit ist ein gemäß der Erfindung hergestelltes Faserbändchen mit besonderem Vorteil dort einsetzbar, wo z.B. im Rahmen des Einsatzes von Vielfach-Spleißen eine genaue Positionierung der Lichtwellenleiter vorausgesetzt werden muß.

Die Erfindung betrifft weiterhin eine Vorrichtung zur Durchführung des vorstehend genannten Verfahrens, welches dadurch gekennzeichnet ist, daß vor der Beschichtungseinrichtung mindestens eine der Führung der Lichtwellenleiter dienende freilaufende Rolle vorgesehen ist, daß die Rolle an ihrem Umfang mit konzentrisch und im gleichen Abstand zueinander verlaufenden Nuten versehen ist.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:

Fig. 1    eine Gesamtdarstellung einer Einrichtung zur Durchführung des erfindungsgemäßen Verfahrens,

Fig. 2    den Aufbau eines Faserbändchens im Querschnitt,

Fig. 3    eine Führungsrolle nach der Erfindung im Längsschnitt,

Fig. 4    einen Ausschnitt aus Fig. 3 mit den Führungsnuten in vergrößerter Darstellung,

Fig. 5 in vergrößerter Darstellung Einzelheiten der Beschichtungseinrichtung und

Fig. 6 in vergrößerter Darstellung als Teil von Fig. 5 die Führungseinrichtung mit V-Nuten.

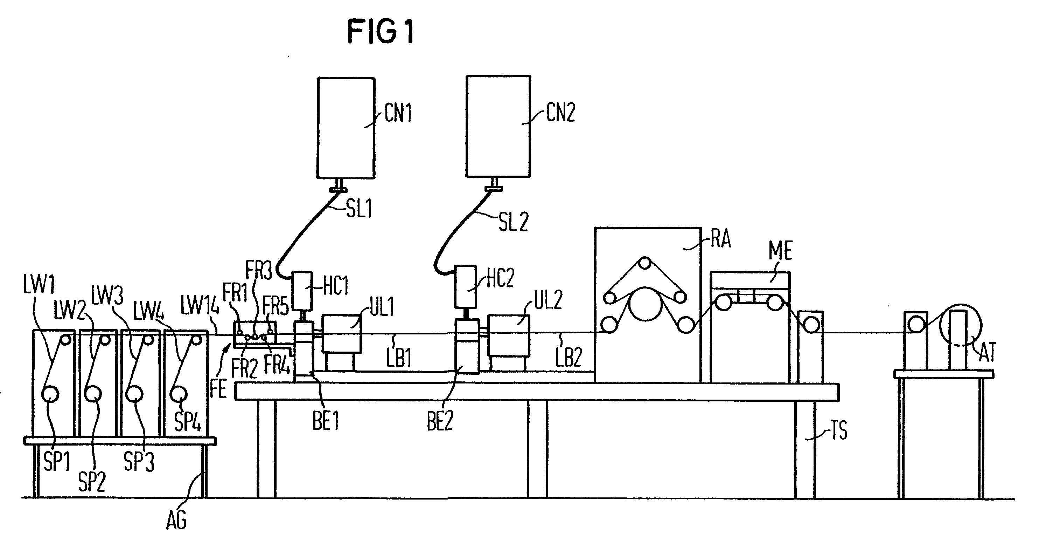

Bei der Einrichtung zur Herstellung eines Faserbändchens nach Fig. 1 ist vorausgesetzt, daß dieses Faserbändchen vier Lichtwellenleiter enthalten soll. Demzufolge sind vier Vorratsspulen SP1-SP4 vorgesehen, von denen die Lichtwellenleiter LW1-LW4 abgezogen werden und im wesentlichen parallel (mit LW14 bezeichnet) zu einer Führungseinrichtung FE gelangen. Diese Führungseinrichtung FE weist mindestens eine freilaufende Führungsrolle auf, wobei im vorliegenden Beispiel insgesamt fünf derartige Führungsrollen vorgesehen und mit FR1-FR5 bezeichnet sind. Diese Führungsrollen FR1-FR5 sind so gegeneinander versetzt angeordnet, daß die Lichtwellenleiter LW14 nicht geradlinig durchlaufen können, sondern in einer etwa wellenförmigen Bahn. Dies hat den Vorteil, daß insbesondere etwaige Restspannungen oder Ungleichmäßigkeiten besser beseitigt werden können, so daß am Ausgang der Führungseinrichtung FE eine mit äußerst geringen Toleranzen versehene Anordnung von vier nebeneinanderliegenden Lichtwellenleitern LW14 vorliegt.

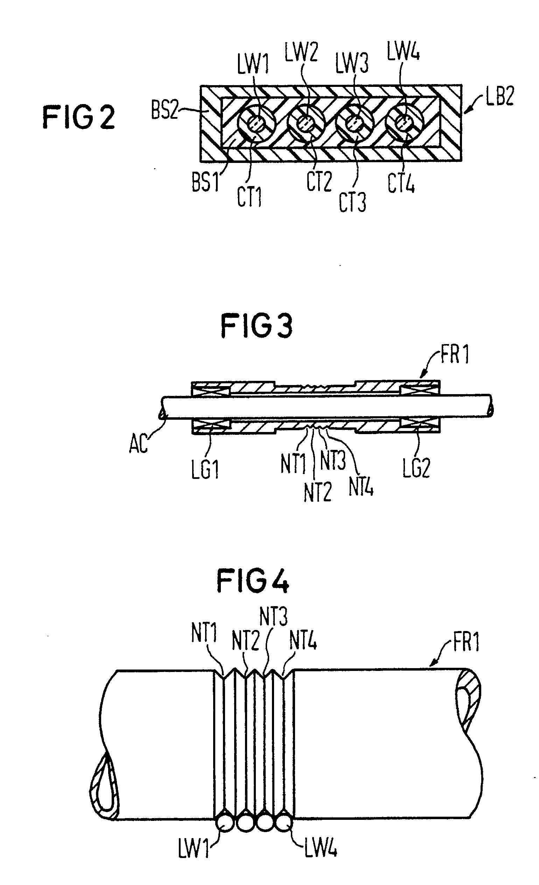

Die vier Lichtwellenleiter LW14 gelangen in eine (erste) Beschichtungseinrichtung BE1, bei der die Lichtwellenleiter mit einem entsprechenden Beschichtungsmaterial aus Kunststoff (in Fig. 2 mit BS1 bezeichnet) versehen werden. Im vorliegenden Beispiel ist ein Behälter CN1 vorgesehen, in dem das Beschichtungsmaterial (bevorzugt in Form eines härtbaren Harzes) untergebracht ist. Über eine Schlauchleitung SL1 wird das Beschichtungsmaterial einem Heizbehälter HC1 zugeführt, von wo aus es direkt auf die vier Lichtwellenleiter LW14 aufgebracht wird. Nach der erfolgenden Aushärtung, insbesondere beschleunigt durch eine UV-Lampe UL1 liegt ein Lichtwellenleiter-Faserbändchen LB1 vor, das im vorliegenden Fall einer zweiten Beschichtungseinrichtung BE2 zugeführt wird. Auch hier sind ein Vorratsbehälter CN2 für das Beschichtungsmaterial, eine Schlauchleitung SL2 und ein heizbarer Vorratsbehälter HC2 vorgesehen, wobei anschließend eine UV-Lampe UL2 die Aushärtung des Beschichtungsmaterials (in Fig. 2 mit BS2 bezeichnet) bewirkt, so daß das endgültige Faserbändchen LB2 vorliegt, das über einen Scheibenabzug, deren Umlenkrollen Führungen enthalten, deren Abmaße im wesentlichen denen des fertigen Faserbändchens entsprechen, einer Meßeinrichtung ME und einer Aufwickeltrommel AT zugeführt wird.

Aus der Querschnittsdarstellung des Faserbändchens LB2 nach Fig. 2 ist ersichtlich, daß die mit einer Schutzschicht (coating) versehenen Lichtwellenleiter LW1-LW4 mit einer ersten Beschichtung BS1 (von der Beschichtungseinrichtung BE1) versehen sind, auf der eine zweite Beschichtung BS2 (von der Beschichtungseinrichtung BE2) aufgebracht ist. Die einzelnen Lichtwellenleiter können mit ihrem Coating direkt aneinander-stoßen oder aber es kann ein in Wirklichkeit sehr geringer Spalt zwischen den coatings vorhanden sein, beispielsweise bedingt durch Durchmesserabweichungen in der Wandstärke des Coatings. Ziel der Erfindung ist es, den Abstand der Längsachsen der einzelnen Lichtwellenleiter LW1-LW4 auch bei hohen Fertigungsgeschwindigkeiten und für verschiedene nicht vollständig exakte Außendurchmesser der Coatings CT1-CT4 innerhalb möglichst geringer Toleranzen zu halten.

Ein erster Schritt hierzu wird dadurch erreicht, daß mindestens eine, vorzugsweise aber alle Führungsrollen FR1-FR5, vor der Beschichtungseinrichtung BE1 an ihrem Umfang mit Nuten versehen ist. Einzelheiten hierzu sind in den Fig. 3 und 4 dargestellt. Die Führungsrolle FR1, entsprechend Fig. 3 ist über Lager LG1 und LG2 leichtgängig auf einer Achse AC gelagert und dreht sich beim Darüberlaufen der auf ihrer Oberfläche aufliegenden Lichtwellenleiter mit. Dadurch ist der Abrieb des Coatings der Lichtwellenleiter möglichst gering gehalten und ebenso die mechanische Beanspruchung der Lichtwellenleiter. Der Durchmesser dieser Rollen wird zweckmäßig etwa in der Größenordnung zwischen 3 und 10 mm gewählt, wobei die Nuten NT1-NT4, entsprechend Fig. 4 etwa so dimensioniert sind, daß die Lichtwellenleiter LW1-LW4 nur teilweise, vorzugsweise weniger als zur Hälfte in die Nuten eintauchen. Dies bedeutet, daß die Lichtwellenleiter LW1-LW4, z.B. bei entsprechend enger Dimensionierung der Abstände der Nuten NT1-NT4 mit ihren Coatings direkt aneinanderstoßen können. Der Öffnungswinkel der Nuten wird etwa in der Größenordnung von 90° gewählt und alle Nuten verlaufen genau über den Umfang und somit parallel zueinander. Auf diese Weise ist sichergestellt, daß am Eingang der Beschichtungseinrichtung BE1 das Lichtwellenleiterbündel LW14 hinsichtlich des Abstandes der Lichtwellenleiter innerhalb sehr enger Toleranzen gehalten werden kann. Der Winkelbereich, in dem die Lichtwellenleiter LW1-LW4 die Führungsrollen FR1-FR4 umschlingen, sollte zweckmäßig zwischen 5° und 15° gewählt werden, auf jeden Fall wesentlich kleiner sein als eine halbe Umschlingung.

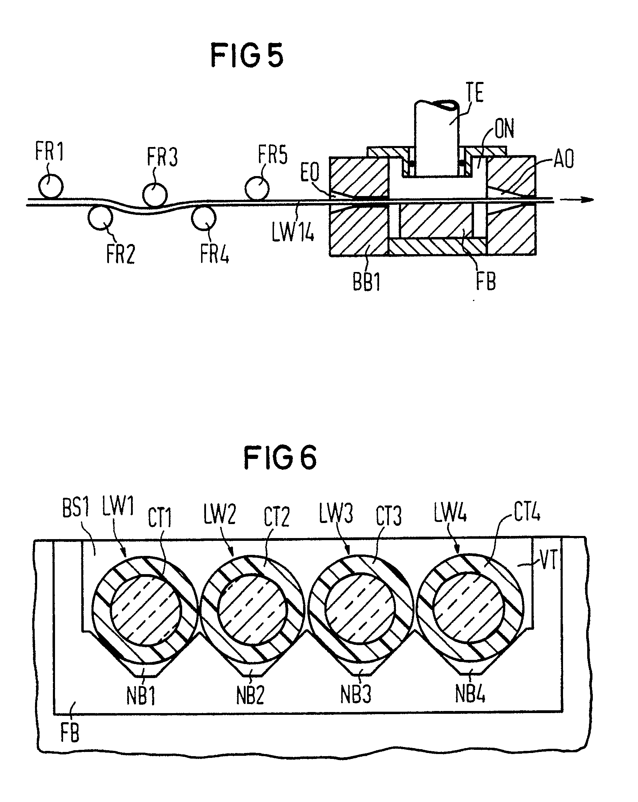

Fig. 5 zeigt in vergrößerter Darstellung die Führung der vier Lichtwellenleiter LW14 nach dem Durchlaufen der Führungsrollen FR1-FR5 im Bereich der Beschichtungseinrichtung BE1. Dort ist ein Beschichtungsbehälter BB1 vorgesehen, der eine jeweils in Durchlaufrichtung, d.h. von links nach rechts sich konusförmig verengende Eintrittsöffnung EO und Auslauföffnung AO aufweist. Einer kammerartigen Öffnung ON wird über ein Zuführungsrohr TE das für die Beschichtung BS1 entsprechend Fig. 2 benötigte Material (bevorzugt Harzmaterial) zugeführt. Die Öffnung ON ist mit einem O-Ring OR abgedichtet, damit zum Reinigen des Beschichtungsbehälters BB das Rohr herausgezogen werden kann. Die Lichtwellenleiter LW14 laufen über einen Führungsblock FB und werden dort mit dem Beschichtungsmaterial BS1 in Berührung gebracht.

Wie aus der vergrößerten Darstellung nach Fig. 6 ersichtlich ist, sind im Bereich des Führungsblokkes FB am Boden einer Vertiefung VT vier Führungsnuten NB1-NB4 vorgesehen, die ebenfalls so dimensioniert sind, daß die Lichtwellenleiter LW1-LW4 mit weniger als der Hälfte in diese Führungnuten eintauchen und deren gegenseitiger Abstand zweckmäßig so gewählt ist, daß beim Auftreten der maximalen Plus-Toleranz der Coatings CT1-CT4 diese Lichtwellenleiter LW1-LW4 sich gerade berühren. Auch der Öffnungswinkel dieser Nuten NB1-NB4 beträgt etwa 90°. Im Bereich der Nuten NB1-NB4 ist auch das Beschichtungsmaterial BS1 vorhanden.

**Patentansprüche**

1. Verfahren zur Herstellung von mehrere Lichtwellenleiter (LW1-LW4) enthaltenden Faserbändchen (LB2), wobei die Lichtwellenleiter (LW1-LW4) von Vorratsspulen abgezogen und einer gemeinsamen Beschichtungseinrichtung (BE1) zugeführt werden,
   **dadurch gekennzeichnet,**
   daß die Lichtwellenleiter (LW1-LW4) vor dem Einlauf in die Beschichtungseinrichtung (BE1) über mindestens eine mit Nuten versehene Rolle (z.B. FR1) geführt werden, wobei die Lichtwellenleiter auf einem Teilbereich des Umfangs auf der Rolle (z.B. FR1) aufliegen.

2. Verfahren nach Anspruch 1,
   **dadurch gekennzeichnet,**
   daß die Lichtwellenleiter (LW1-LW4) über mehrere Rollen (FR1-FR4) derart geführt werden, daß der Durchlauf nicht geradlinig erfolgt.

3. Verfahren nach Anspruch 2,
   **dadurch gekennzeichnet,**
   daß die Lichtwellenleiter (LW1-LW4) bei allen Rollen über Nuten geführt werden.

4. Verfahren zur Herstellung von mehreren Lichtwellenleiter (LW1-LW4) enthaltenden Faserbändchen (LB2), wobei die Lichtwellenleiter (LW1-LW4) von Vorratsspulen abgezogen und einer gemeinsamen Beschichtungseinrichtung (BE1) zugeführt werden, insbesondere nach einem der vorhergehenden Ansprüche,
   **dadurch gekennzeichnet,**
   daß die Lichtwellenleiter (LW1-LW4) im Bereich der Beschichtungseinrichtung (BE1) über parallel nebeneinanderliegende Nuten (NB1-NB4) geführt wird und daß im Bereich dieser Nuten das Material für die gemeinsame Beschichtung der Lichtwellenleiter (LW1-LW4) diesen zugeführt wird.

5. Vorrichtung zur Durchführung des Verfahrens nach einem der vorhergehenden Ansprüche,
   **dadurch gekennzeichnet,**
   daß vor der Beschichtungseinrichtung (BE1) mindestens eine der Führung der Lichtwellenleiter (LW1-LW4) dienende freilaufende Rolle (z.B. FR1) vorgesehen ist, daß die Rolle an ihrem Umfang mit konzentrisch und im gleichen Abstand zueinander verlaufenden Nuten (NT1-NT4) versehen ist.

6. Vorrichtung zur Durchführung des Verfahrens nach Anspruch 5,
   **dadurch gekennzeichnet,**
   daß die Tiefe der Nuten (NT1-NT4) kleiner gewählt ist als der Durchmesser der Lichtwellenleiter (LW1-LW4).

7. Vorrichtung zur Durchführung des Verfahrens nach einem der Ansprüche 5 oder 6,
   **dadurch gekennzeichnet,**
   daß mehrere Rollen (FR1-FR5) räumlich gegeneinander versetzt angeordnet sind.

8. Vorrichtung zur Durchführung des Verfahrens nach einem der Ansprüche 5 bis 7,
   **dadurch gekennzeichnet,**
   daß der Winkelbereich, in dem die Lichtwellenleiter an der Rolle anliegen zwischen 5° und 15° gewählt ist.

9. Vorrichtung zur Durchführung des Verfahrens nach einem der Ansprüche 5 bis 8,
   **dadurch gekennzeichnet,**
   daß die Nuten (NT1-NT4) so dimensioniert sind, daß sie die Lichtwellenleiter (LW1-LW4) nur zum Teil, vorzugsweise weniger als 50 % aufnehmen.

10. Vorrichtung zur Durchführung des Verfahrens nach einem der Ansprüche 1 bis 4,
    **dadurch gekennzeichnet,**
    daß auf einen Führungsblock (FB) mehrere parallel verlaufende Nuten (NB1-NB4) angeordnet sind und daß der Führungsblock (FB) in einer Öffnung (ON) angeordnet ist, welcher das Beschichtungsmaterial zugeführt wird.

FIG 1

**FIG 2**

**FIG 3**

**FIG 4**

# FIG 5

# FIG 6